(19) Europäisches Patentamt / European Patent Office / Office européen des brevets

(11) **EP 1 746 119 A1**

(12) **EUROPEAN PATENT APPLICATION**

(43) Date of publication:
**24.01.2007 Bulletin 2007/04**

(51) Int Cl.:
*C08G 59/18* (2006.01)     *B29C 44/00* (2006.01)
*C08J 9/00* (2006.01)     *B29C 70/50* (2006.01)

(21) Application number: **05015956.5**

(22) Date of filing: **22.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **3M Innovative Properties Company St. Paul,
Minnesota 55133-3427 (US)**

(72) Inventor: **Lamon, Alain
78600 Maisons-Lafitte (FR)**

(74) Representative: **Wilhelm, Stefan
Office of Intellectual Property Counsel,
c/o 3M Deutschland GmbH,
Carl-Schurz-Strasse 1
41453 Neuss (DE)**

(54) **Thermally curable precursor of a toughened thermo-expanded film and a film made thereof**

(57) Precursor of a toughened foamed film comprising

a. 30 - 60 wt. % of at least one epoxy compound with an average epoxy equivalent weight of at least 350 g,
b. 10-25 wt. % of at least one epoxy compound with an average epoxy equivalent weight of less than 200 g,
c. 2 - 40 wt. % of at least one epoxy curing agent,
d. 10 - 30 wt. % of at least one toughening agent, and
e. at least one blowing agent

wherein the mass ratio of the epoxy components a and b and the amount of the toughening component d is selected to provide a floating roller peel strength of the cured film of at least 150 N/25 mm at 23 °C and/or a shear impact strength of at least 12 kN/m² at 23 °C.

*Fig. 1*

**Description**

Field of the invention

The present invention relates to the thermally curably epoxy-based precursor of a toughened thermo-expanded film and to the thermoset film obtained from such precursor. The present invention also relates to a method of manufacturing the thermally curable epoxy-based precursor of the present invention, and to a method of thermosetting such precursor.

Background of the invention

Thermo-expandable curable films which are also referred to as core splice films are film materials designed to expand during the thermal curing reaction in order to provide gap filling properties. Expandable films and moulded products obtained therefrom are disclosed, for example, in EP 0,511,716. The expandable film of this reference comprises a non-pourable thermosetting matrix system and particles of a microcellular in-situ expandable thermoplastic polymer containing an expansion agent therein. Upon thermosetting the resulting thermoset and expanded film exhibits a thickness which is about 1 - 400 % greater than the thickness of the thermosettable precursor film. While the expandable films of EP '716 are designed to allow for a controlled expansion during the thermal curing reaction the mechanical properties of the resulting thermoset films do not always meet the demanding profile of properties required, in particular, in aerospace applications. Generally, thermoset expanded epoxy-based materials available so far tend to be relatively rigid and show a low degree of resistance to shock and bending forces which may result in the formation of cracks during handling of fabricated parts and panels. Also, thermoset expanded expoxy-based materials available in the prior art frequently exhibit an insufficient toughness.

WO 03/055,957 discloses high-strength and shock-resistant structural adhesives suitable in vehicle manufacturing, aircraft construction or railway vehicle manufacturing as well as for the inner reinforcement of cavities in vehicle manufacturing, and for producing reinforcing coatings for thin-walled metal sheets or plastic components.

US 5,464,902 discloses relatively brittle epoxy resin systems which are toughened against impact-induced damage by the addition of minor quantities of functionalized elastomer particles having a glass transition temperature of less than 10 °C. These materials are characterized as being useful as structured film adhesives and matrix resins for fiber-reinforced prepegs.

EP 1.272,587 discloses impact resistant epoxy resin compositions which exhibit a sufficient flexibility and an improved peel strength at low temperatures without compromising their high-temperature behaviour. The compositions comprise a reaction product obtainable from a di-functional amino-terminated polymer and a tri- or tetra-carboxylic acid anhydride having on average more than one imide group and carboxylic group per molecule, or a reaction product from a tri- or poly-functional polyol or a tri- or poly-functional amino-terminated polymer and a cyclic carboxylic anhydride which reaction product contains on average more than one carboxyl group per molecule.

While these toughened thermoset epoxy-based films may provide advantageous energy absorbing properties which make them less sensitive to bending forces, they are mostly designed for bonding applications and they do not exhibit a controlled expansion behaviour required to provide for gap filling properties during cure and a smooth finish upon curing.

It was therefore an object of the present invention to provide thermally expandable and curable epoxy-based precursors of an expanded thermoset film exhibiting upon curing both favourable energy absorbing properties and gap filling properties. It is another object of the present invention to provide thermally expandable and curable epoxy-based precursors thermosettable into expanded films having both advantageous mechanical properties and a smooth and aesthetically appealing finish.

Other objects of the present invention can be taken by the person skilled in the art from the detailed specification of the invention given below.

Summary of the invention

The present invention relates to the thermally curable precursor of a toughened foamed film comprising

    a. 30 - 60 wt. % of at least one epoxy compound with an average epoxy equivalent weight of at least 350 g.
    b. 10 - 25 wt. % of at least one epoxy compound with an average epoxy equivalent weight of less than 220 g,
    c. 2 - 40 wt. % of at least one epoxy curing agent,
    d. 10 - 30 wt. % of at least one toughening agent, and
    e. at least one blowing agent

wherein the mass ratio of the epoxy components a and b and the amount of the toughening component d is selected to provide a floating roller peel test strength of the cured film of at least 150 N/25 mm at 23 °C and/or a shear impact strength of at least 11.5 kN/m$^2$ at 23 °C.

Both the one or more epoxy compounds with an average epoxy equivalent weight of at least 350 g and the one or more epoxy compounds with an average epoxy equivalent weight of less than 220 g each preferably have an average epoxy functionality of at least 2.

The present invention also relates to the toughened thermo-expanded cured film which is obtainable by thermally curing the precursor of the present invention at a temperature of between 105 and 180 °C.

The present invention also relates to the use of the precursor of the present invention for void filling and edge finishing applications.

Brief description of the figures

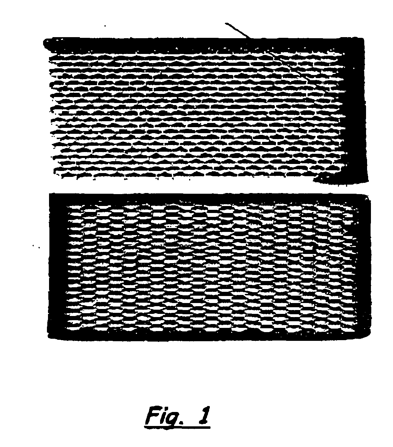

*Fig. 1* is a photograph showing the cured toughened foamed film of Example 1 applied as an edge-sealant means to a conventional honeycomb core structure.

Detailed description of the invention

The term "film" as used above and below relates to articles having an extension in two directions which exceed the extension in a third direction which is essentially orthogonal to the first two directions by a factor of at least 3 and more preferably of at least 5. More particularly, the term "film" includes, for example, essentially two-dimensional articles which are usually referred to as strips, foils, bands, sheets, sheetings or the like.

Prior to curing, the precursor film of the present invention preferably is deformable and drapable so that it can be applied to curved surfaces and assume any essentially two-dimensional shape.

Any organic compound having an oxirane ring polymerizable by a ring opening reaction may be used as an epoxy compound in the precursors of the present invention. Such materials, broadly called epoxies, include monomeric epoxy compounds and polymeric epoxy compounds and can be aliphatic, cycloaliphatic, aromatic or heterocyclic. Useful materials generally have at least two polymerizable epoxy groups per molecule and, more preferably, from two to four polymerizable epoxy groups per molecule.

It is essential in the present invention that the precursors of the thermo-expanded cured films comprise at least one high molecular weight epoxy compound and at least one low molecular weight epoxy compound to provide for the desired balance between a high tackiness and processable viscosity of the precursor and a high toughness of the cured film.

The at least one low molecular weight epoxy compound is preferably selected from the group of epoxy compounds having an average epoxy functionality, i. e. an average number of polymerizable epoxy groups per molecule, of at least 2 and, more preferably, from 2 to 4 and an average epoxy equivalent weight of less than 220 g and more preferably of between 100 and 200 g. The average epoxy equivalent weight is measured according to DIN 16945. These low molecular weight epoxy compounds are generally liquid at room temperature and are frequently also referred to as reactive epoxy thinners or reactive epoxy diluents. These compounds are preferably selected from the group of optionally substituted di- and polyglycidyl ethers of di- and polyphenols or aliphatic or cycloaliphatic hydroxyl compounds. Suitable low molecular weight epoxy compounds are commercially available, for example, from Resolution Performance Products under the trade designation Heloxy™ Modifiers.

The at least one high molecular weight epoxy compound preferably has an average epoxy functionality of at least 2 and, more preferably, of between 2 and 4 and an average epoxy equivalent weight of at least 350 g, more preferably of at least 425 g and especially preferably of at least 500 g. The backbone may be of any type and it is preferably essentially halogen-free and, in particular, chlorine-free. Any substituents can also be essentially halogen-free or brominated and may otherwise be any group not having a nucleophilic or an electrophilic moiety (such as an active hydrogen atom) that is reactive with an oxirane ring. Permissible substituents include ester groups, ether groups, sulfonate groups, siloxane groups, nitro groups, amide groups, nitrile groups, phosphate groups, etc. Mixtures of various organic epoxies may also be used in the compositions of the invention. Suitable high molecular weight epoxy compounds are commercially available, for example, from Leuna Harze GmbH under the trade designation Epilox™ A50-02 Resolution Performance Products Epikote™ 1001.

Epoxy compounds which are useful in the present invention as low molecular weight or high molecular weight epoxy compounds, respectively, are preferably derived from bisphenol A, bisphenol E, bisphenol F, bisphenol S, aliphatic and aromatic amines, such as methylene dianiline and aminophenols, and halogen substituted bisphenol resins, novolacs, aliphatic epoxies, and combinations thereof and/or therebetween. More preferably, the organic epoxies are selected from the group comprising diglycidyl ethers of bisphenol A and bisphenol F and epoxy novolacs. Other useful organic epoxies include those disclosed in U.S. Pat. No. 5,019,605, U.S. Pat. No. 4,145,369, U.S. Pat. No. 3,445,436, U.S. Pat.

No. 3,018,262, and Handbook of Epoxy Resins by Lee and Neville, McGraw Hill Book Co., New York (1967).

The weight percentages of the one or more high molecular weight epoxy compounds and the one or more low molecular weight epoxy compounds, respectively, with respect to the mass of the precursor and their ratio, need to be adjusted to provide cured or thermoset films having a high toughness and/or advantageous energy absorbing properties. These properties are quantified in the present invention by measuring the shear impact strength (according to a modified ASTM D 950 test method specified in the experimental section below) and/or the so-called floating roller peel strength (measured as specified in the experimental section below) of the cured film. In the present invention the cured films exhibit a floating roller peel strength of at least 150 N/25 mm, more preferably of at least 175 N/25 mm and especially preferably of at least 185 N/25 mm and/or a shear impact strength of at least 12 kN/m$^2$, more preferably of at least 15 kN/m$^2$ and especially preferably of at least 17.5 kN/m$^2$. Both the floating roller peel strength and the shear impact strength are measured at a temperature of 23 °C. The preparation of the samples for testing (curing at 125 °C for 60 minutes) and the test methods are detailed in the test method section below. The cured films of the present invention especially preferably exhibit both a floating roller peel strength of at least 150 N/25 mm and a shear impact strength of at least 12 kN/m$^2$.

The at least one high molecular weight epoxy compound is included in the precursor of the present invention in a weight percentage of between 30 and 60 wt. %. It was found by the present inventor that the toughness of the cured film and, in particular, its shear impact strength tends to be insufficient for the demanding applications in the aerospace industry if the amount of the at least one high molecular weight epoxy compound is less than about 30 wt. %. It was also found that the surface quality of cured films used for edge sealing and finishing applications tend to deteriorate if the amount of the at least one high molecular weight epoxy compound was more than about 60 wt. % with respect to the mass of the precursor. Without wishing to be bound by such considerations it is speculated by the present inventor that the viscosity of the precursor tends to become too high to allow for a controlled and uniform expansion during curing if the amount of the at least one high molecular weight epoxy compounds is more than about 60 wt. %.

The at least one low molecular weight epoxy compound is included in the precursor of the present invention in an amount of between 10 and 25 wt. %, more preferably of between 12.5 and 23.5 wt. % and especially preferably between 15 and 22.5 wt.%. It was found by the present inventor that the tackiness of the uncured precursor film tends to be too low for various applications if the amount of the one or more low molecular weight epoxy compounds of component b. is less than about 10 wt. % with respect to the mass of the precursor. If such amount is more than about 25 wt. %, the viscosity of the precursor tends to become too low so that it is difficult to adjust the expansion of the precursor upon curing to the desired volume extension range of between 10 and 100 vol. % and, more preferably, of between 20 and 60 vol. % as measured after curing at 125 °C for 60 minutes, The ratio of the amount of the at least one high molecular weight epoxy compound over the amount of the at least one lower molecular weight epoxy compound preferably is between 1.5 and 6 and more preferably between 2.5 and 5.5. If such weight ratio is less than about 1.5, the cured film tends to exhibit an undesirably low toughness and the expansion behaviour of the precursor during curing is difficult to control. If such weight ratio is higher than about 6, the uncured precursor tends to have an undesirably low tackiness and the void filling and edge sealing properties of the precursor tend to be adversely affected.

Epoxide hardeners useful in the invention are materials that react with the oxirane ring of the organic epoxide to cause substantial cross-linking of the epoxide. These materials contain at least one nucleophilic or electrophilic moiety (such as an active hydrogen atom) that causes the cross-linking reaction to occur. Epoxide hardeners are distinct from epoxide chain extension agents, which primarily become lodged between chains of the organic epoxide and cause little, if any cross-linking. Epoxy hardeners as used herein are also known in the art as curing agents, catalysts, epoxy curatives, and curatives.

Sometimes it is differentiated between epoxide hardeners and accelerators which are used to increase the rate of the epoxide curing reaction. Accelerators typically are multifunctional materials which can also be classified as epoxide hardeners. Therefore, in the present specification, no differentiation is made between hardeners and accelerators.

Epoxide hardeners useful in the invention include those which are conventionally used for curing epoxy resin compositions and forming crosslinked polymer networks. Such agents include aliphatic and aromatic primary amines, for example, di-(4-aminophenyl)sulfone, di-(4-aminophenyl)-ethers, and 2,2-bis(4-aminophenyl)propane. Such compounds also include aliphatic and aromatic tertiary amines such as dimethylaminopropylamine and pyridine, which may act as catalysts to generate substantial crosslinking. Further, boron complexes, in particular boron complexes with monoethanolamine, imidazoles such as 2-ethyl-methylimidazole, guanidines such as tetramethyl guanidine, substituted ureas such as toluene diisocyanate urea, dicyanodiamide, and acid anhydrides such as the 4-methyltetrahydroxyphthalic acid anhydride, 3-methyltetrahydroxyphthalic acid anhydride and methylnorbornenephthalic acid anhydride, may be employed. Still other useful hardeners include polyamines, mercaptans and phenols. Preferably, the epoxide hardener is selected from the group consisting of amines, acid anhydrides, guanidines, dicyandiamide and mixtures thereof. More preferably the epoxide hardener is a mixture of dicyandiamide and 2,4-di-(N'N'-dimethylureido)toluene.

The precursors of the present invention comprise between 2 and 40 wt. % and more preferably between 4 and 30 wt. % of one or more epoxide curing agents.

The precursor of the present invention furthermore includes one or more toughening agents in an amount of 10 to 30 wt. % and more preferably of between 12.5 and 25 wt. % with respect to the mass of the precursor. The toughening agents are preferably selected from a group comprising core-shell toughening agents, CTBNs (carboxyl and/or nitrile terminated butadiene/nitrile rubbers) and high molecular weight amine terminated polytetramethylene oxide.

Core-shell toughening agents which are especially preferred in the present invention usually comprise different materials in the inner core region and the outer shell region, respectively. Preferably, the core may be harder than the shell but this is not required. The shell may comprise harder material and/or the shell may be layered in its construction. Most preferably, the inner hard core component is comprised of a single and/or a plurality of organic polymers and inorganic oxides from the first, second and/or third transition series of the periodic table such as silica, alumina, zirconia, and/or naturally occurring minerals such as feldspars, silicates, aluminates, zirconates, and/or other hardened materials such as carbides, nitrides, silicides, aluminides, and/or some combination thereof and therebetween. The outer soft shell component may be comprised of rubbers such as diene, olefin rubbers, natural rubber, polyisoprene, copolymers thereof, ethylene propylene monomer rubber, diene-acrylonitrile copolymers, copolymers of vinyl aromatic monomers, styrene-butadiene copolymers known as SBR rubbers, and terpolymers of dienes with acrylonitrile or unsaturated esters and styrene or vinyl toluene. The soft shell preferably includes modifications with functionalities such as carboxyl, hydroxyl, epoxy, cyanates, isocyanates, amino, and thiol which can react with the epoxy components of the precursor.

Core-shell toughening agents which are useful in the present invention are commercially available, for example, from Rohm and Hass under the trade designation Paraloid™.

CTBN toughening agents react through their carboxyl and/or nitrile functional groups with the epoxide component of the precursor during curing thereby introducing their butadiene/nitrile rubber portion as a soft, shock-absorbing segment into the epoxy network forming a hard segment.

CTBN toughening agents which are useful in the present invention are commercially available, for example, from Hanse Chemie AG, Hamburg, Germany, under the trade designation "Albipox™".

A high molecular weight amine terminated polytetramethylene oxide useful in the present invention is commercially available, for example, from 3M Company, St. Paul/MN, USA, under the trade designation "3M EPX™ Rubber".

The amount of the one or more toughening agents present in the precursors of the present invention will vary from about 10 to 30 wt. %, more preferably from about 12.5 to 25 wt. % and especially preferably from about 12.5 to 20 wt. % with respect to the mass of the precursor.

The precursors of the present invention furthermore comprise one or more blowing agents which are preferably selected from the group of non-encapsulated or encapsulated blowing agents, respectively. Non-chemical blowing agents, which are sometimes also referred to as chemical blowing agents, release a gaseous compound such as nitrogen, nitrogen oxide, hydrogen or carboxide dioxide during heating. Chemical blowing agents which are useful in the present invention include, for example, azobisisobutyronitriles, azodicarbonamides, carbazides, hydrazides, non-azo chemical blowing agents based on sodium borohydride or sodium bicarbonate/citric acid and dinitrosopentamethylenetetramine.

It was surprisingly found by the present inventor that chemical blowing agents can be used in manufacturing cured epoxy-based films having advantageous energy absorbing properties and edge sealing finishing characteristics when carefully controlling the amount of such chemical blowing agents in a range of between about 0.5 and 1.8 wt. % and more preferably between about 0.7 - 1.5 wt. %. This was surprising since it had been assumed so far that the expansion behaviour of precursors comprising one or more chemical blowing agents could not be effectively controlled but that the eruption of released gaseous compounds during curing would result in the formation of channels and pinholes in the epoxide matrix adversely affecting the mechanical properties of the film. It was also assumed that precursors comprising chemical blowing agents would not be useful for gap filling and edge sealing and finishing applications because the chemical blowing agents would not provide for the required uniform expansion characteristics.

Contrary to these prejudicial expectations it was surprisingly found by the present inventor that precursors comprising one or more chemical blowing agents can be used for manufacturing cured thermo-expanded epoxy-based films with advantageous mechanical properties if the amount of such blowing agents is carefully adjusted within a narrow window of between 0.5 and 1.8 wt. %. If the amount of such one or more chemical blowing agent is less than about 0.5 wt. % with respect to the mass of the precursor, the overall expansion of the film during curing tends to be too low to provide for an effective gap filling and/or edge sealing. If the amount of such one or more chemical blowing agents is more than about 1.8 wt. % with respect to the mass of the precursor, the mechanical properties of the cured film tend to deteriorate distinctly.

The amount of the one or more chemical blowing agents preferably is 0.5 to 1.8 wt. % and more preferably 0.7 to 1.5 wt. % with respect to the mass of the precursor.

Encapsulated blowing agents usually comprise liquified gases such as, for example, trichlorofluoromethane or hydrocarbons such as n-pentane, iso-pentane, neo-pentane, butane and/or iso-butane encapsulated in a polymeric thermoplastic shell. Upon heating the liquified gas expands and enlarges or blows up the thermoplastic shell like a "micro-balloon".

It was found by the present inventor that cured thermo-expanded epoxy-based films with advantageous mechanical properties and edge sealing and finishing properties are obtained when using one or more encapsulated blowing agents in an amount of between 2 and 10 wt. % and more preferably of between 3 and 9 wt. % with respect to the mass of the precursor.

The amount of the one or more encapsulated or chemical blowing agents, respectively, is preferably selected to provide a volume expansion of the cured film (cured at 125 °C for 60 minutes) in relation to the non-cured film of between 25 and 100 vol. %, more preferably of between 30 and 85 vol. % and especially preferably of between 40 and 70 vol. %. It was found by the present inventor that in this narrow expansion window the optimum balance between the required mechanical properties like high energy absorbing properties and a high toughness on the one hand, and advantageous void filling and edge sealing finishing properties on the other hand is obtained. In particular, it was found that in such window thermo-expanded cured edge sealing films can be obtained exhibiting a smooth, essentially void and bubble-free finish so that no rework of such surfaces is required during manufacture.

Precursors of the present invention comprising one or more chemical blowing agents are preferred because a lower amount of blowing agents is required and the shell component of the core-shell toughener needs to be selected so that it is compatibable with the epoxy matrix which requires an additional step.

Especially preferred are precursors of the present invention comprising

a. 35 - 55 wt. % of at least one epoxy compound with an average epoxy functionality of at least 2 and an average epoxy equivalent weight of at least 350 g,
b. 12.5 - 23.5 wt. % of at least one epoxy compound with an average epoxy functionality of at least 2 and an average epoxy equivalent weight of less than 210 g,
c. 2 - 35 wt. % of at least one epoxy curing agent,
d. 12.5 - 25 wt. % of at least one toughening agent, and
e. at least one chemical blowing agent in an amount of between 0.5 and 1.8 wt.% with respect to the mass of the precursor

wherein the mass ratio of the epoxy components a and b and the amount of the toughening component d is selected to provide a floating roller peel strength of the cured film of at least 150 N/25 mm at 23 °C and/or a shear impact strength of at least 11.5 $kN/m^2$ at 23 °C.

The precursors of the present invention may optionally comprise further components, additives and/or agents.

The precursors of the present invention may preferably comprise one or more film forming agents in an amount of of from 0.25 - 5 wt. % and more preferably from 1 - 3 wt. % with respect to the mass of the precursor. Suitable film forming agents can be selected, for example, from a group of compounds comprising polyhydroxyether compounds such as phenoxy resins, polyether diamines, polyvinyl acetals and mixtures thereof. Polyhydroxyether compounds are preferred. It was found by the present inventor that film forming agents can be used to control the viscosity and expansion behaviour of the precursor during thermosetting.

Other optional ingredients that may be preferably incorporated into the compositions of the invention include wetting agents, such as those selected from the group consisting of titanates, silanes, zirconates, zircoaluminates, phosphoric ester(s) and mixtures thereof. The wetting agent improves the mixability and processability of the composition and can also enhance the composition's handling characteristics. Useful wetting agents are disclosed in U.S. 5,019,605. An especially useful wetting agent is commercially available as Coatex DO-UP6L from Coatex, Gene, France.

The precursors of the present invention may preferably comprise one or more fillers which may be used to regulate rheological properties of the precursor and adjust its viscosity to improve and adjust its processability with respect to a specific application. These are preferably inorganic fillers, including silica. Especially preferred is hydrophobic fumed silica which is commercially available as Aerosil™ from Degussa or CAB-O-SIL™ from Cabot.

The precursors of the invention can be readily prepared by a number of techniques. For example, the various components may be added under ambient conditions to a suitable internal mixing vessel, such as a Mogul mixer. The mixing temperature is not critical and the mixing of the epoxy components a. and b. and the toughening agent component d. is typically performed at a temperature of 80 - 85 °C. When the epoxy curing agent component c. and the blowing agent component e. is added the temperature may preferably be decreased to not more than 70 °C. Mixing is continued until the components form a homogeneous mixture, after which time the precursor is removed from the mixer.

Due to their excellent processability the precursors can be processed as a film by conventional application equipment such as extruders or hot-melt coaters.

The precursor can be processed as a self-supporting film or it may be applied to various substrates such as, for example, metals (for example, Al, Al alloys, titanium or stainless steel) or other substrates comprising, for example, glass, boron, carbon, Kevlar fibers, epoxy, phenols, cyanate esters and polyester matrices. The thickness of the precursor film of the present invention preferably is between 0.50 mm and 3.80 mm and more preferably between 1.25 mm and 2.50 mm. In some applications it may be applied, for example, as a thin coating with a thickness of typically up to 3 mm. In other applications it may be used for the preparation of bulky articles like, for example, for the construction of composite floor panels or walls used in aircraft interiors. Such floor panels or walls typically comprise a honeycomb structure with a thickness of typically from 1 mm to 80 mm which may be sealed and edge-finished filled with a precursor film of the present invention.

The precursor is subsequently thermally cured. The curing conditions can be widely varied depending on the specific application. The curing temperature is typically chosen between 105 °C and 180 °C, and the curing time typically amounts between 15 and 180 minutes. Heat-up rates to reach those curing temperatures is typically chosen between 0.5 °C/min to 5.0 °C/min.

Above and below, the percentages given are percentages by weight unless indicated otherwise. The percentages of the components a. — e. and, if present, any additives constituting the precursor add up to 100 wt. %. The invention is further illustrated by the following Examples which are intended to be explanatory and not limiting. Prior to that a number of test methods is given which is used in the Examples.

Test methods

***Preparation of test specimens for the Floating Roller Peel Test (sometimes also referred to as the Metal-to-Metal Peel Strength Testing)***

As the precursors of this invention foam during the curing process, either 1.6 mm thick hard shims for thermo-foaming precursor films with an uncured thickness of 1.27 mm or 3.2 mm thick hard shims for thermo-foaming precursor films having an uncured thickness of 2.54 mm were used. The shims were protected with a pressure sensitive PTFE tape available under product reference 5480 by 3M Company. For each peel test panel made, an adapted shim on each side (a total of 4 shims) prevented the thermo foaming precursor film to foam out of the peel test panel. Curing was performed in a platen press using a heat-up rate of 3 °C/minute. The platen press was kept during thermal curing at a constant pressure of 100 kPa on the 4 shims resulting in an essentially constant bond line thickness (thickness of the cured film) and an essentially constant cured density of the films. The adhesive precursor films were then cured for 60 minutes at 125 °C. The cured adhesive films were then cooled down using 3 °C/minute.

*Floating Roller Peel Test (sometimes also referred to as Metal to Metal Peel Strength Test)*

The surface preparation of the clad Aluminium alloy 2024T3 plates used for test sample preparation was based on Optimized Forest Product Laboratory (Optimized FPL etching solution) standard (sulfochromic etching) and is based on the European standard EN 2334 version B with the following modifications of the test procedure as listed in Table 1 below:

*Table 1*

|  | EN 2334 B | Test conditions applied in the present invention |
|---|---|---|
| $[H_2SO_4]$ | 220 - 300 g/dm$^3$ | 250 - 332 g/dm$^3$ |
| $[Na_2Cr_2O_7]$ | 67-83 g/dm$^3$ | 35- 45 g/dm$^3$ |
| Temperature of sulfochromic bath | 60-65 °C | 70 +/- 2 °C |
| Sulfochromic immersion time | 28 - 30 min. | 20 min. |

After cure and prior to testing the test specimens were stored for 16 hours at a room temperature of 23 +/- 2 °C and a relative humidity of 50 +/- 5 %. The test specimens were then carefully cut into individual specimens with a uniform with of 25mm using a BATENS band saw model B350. The cutting was straight and parallel. Testing was then conducted under the test conditions of 23 +/- 2 °C and 50 +/- 5 % relative humidity.

Peel testing was then performed according to EN 2243-2 using a peel rate of 150 mm/minute on a tensile testing machine available from ZWICK as model 1467 Three measurements per Example were conducted and results averaged and reported in N/25mm.

*Impact strength test of adhesive bonds*

All impact strength test specimens were made using etched 2024T3 Aluminium Alloy plates. For assembling impact strength test specimen always one Aluminium plate with the dimensions 35.0 mm x 25.0 mm x 8.0 mm and a second plate with the with dimension 25.0 mm x 25.0 mm x 8 mm were bonded together using an uncured precursor film having an surface area of 25.0 mm x 25.0 mm. The precursor films were then cured for 60 minutes at 125 °C. The adhesive films were heated up and cooled down using 3°C/minute ramps.

Impact strength test specimens were then conditioned 16 hours at ambient condition 23 +/-2 °C, 50 +/-5 % relative humidity before testing. Impact strength testing was then performed at room temperature condition of 23 +/- 2 °C, 50 +/-5 % relative humidity according to ASTM D950. Three measurements per example were conducted and results averaged and reported in $kN/m^2$.

*Free expansion of foamable precursor films*

The free expansion in % was determined according to EN 2667-3. Test specimens were prepared by first cutting out square aluminium alloy sheets 2024-T3 in accordance with EN 2090 having the dimension of 120 mm x 120 mm and a sheet thickness of 1 to 2 mm. In a next step square adhesive film samples were cut out having the dimension of 100 mm x 100 mm. The adhesive squares were then adhered to the centre of the aluminium alloy sheets. Prior to curing the uncured precursor test specimens were measured with a flat edge micrometer calliper with a precision of 0.01 mm at a temperature of 4 °C or lower (measurement is performed in a lower temperature that ambient in order to avoid tack of the film to adhere to the thickness measurement tooling). The precursor specimens were then cured either at 125 °C +/- 3 °C or 175 °C +/- 3 °C using a heating air-circulating oven available from MPC and run at a heat-up ramp of 3 °C/min. Prior to the cured thickness measurement all test specimen were stored at room temperature of 23 +/-2 °C and a relative humidity of 50 +/- 5 % until the cured specimens had returned to ambient temperature. The expansion rate was then calculated according to the following formula :

$$\text{Expansion (\%)} = ( \, (\text{Thickness}_{cured} - \text{Thickness}_{uncured}) \, / \, \text{Thickness}_{uncured}) \times 100$$

*List of materials*

| (1) | Solid epoxy resin | **Epilox A.50-02**, epoxy resin based on bisphenol A and epichlorohydrin, available from Leuna Harze GmbH, Germany which has an average epoxy functionality of 2 and an average epoxy equivalent weight of 450-500 g |
|---|---|---|
| (2) | Solid epoxy resin | **Epikote 1001**, epoxy resin based on bisphenol A and epichlorohydrin, available from Resolution Performance Products, The Netherlands which has an average epoxy functionality of 2 and an average epoxy equivalent weight of 450-500 g |
| (3) | Solid epoxy resin | **BPA**, 2,2 - bis(4-hydroxyphenyl)propane, available from Aldrich, U.S.A |
| (4) | Liquid epoxy resin | **Epilox AF.18-50,** low viscosity epoxy resin based on bisphenol A / bisphenol F blend, available from Leuna Harze GmbH, Germany which has an average epoxy functionality of 2 and an average epoxy equivalent weight of 173-183 g |
| (7) | Liquid epoxy resin (also referred to as reactive diluent) | **Epon MK 107**, diglycidyl ether of cyclohexane dimethanol, available from Resolution Performance Products USA which has an average epoxy functionality of 2 and an average epoxy equivalent weight of 155-170 g |
| (8) | Pre-reacted toughener | **Albipox 1000**, liquid CTBN epoxy prepolymer, available from Hanse Chemie, Germany |
| (9) | Toughener | **Paraloid EXL 2600,** methacrylate butadiene styrene (MBS) impact modifier, available from Rohm and Haas, Germany |

(continued)

| (10) | Film former | **Paphen PKHP 200,** polyhydroxyether ("phenoxy") resins, available from Inchem Corporation, USA |
|------|-------------|---|
| (11) | Black pigment | **Raven 1255 P**, fumace carbon black, available from Columbian Carbon,USA |
| (12) | Silica filler | **Aerosil R.202 W,** polysiloxane treated fumed silica, available from Degussa, Germany |
| (13) | Anti-corrosive pigment | **Shieldex AC 5, Ca$^{2+}$** -modified silica, available from Grace Corporation, USA |
| (14) | Primary curative | **Amicure CG 1200,** 2-cyanoguanidine (dicyandiamide), available from Air Products |
| (15) | Curative accelerator | **Omicure U.52M,** 4,4 methylene bisphenyl dimethyl urea, available from CVC speciality Chemicals, USA |
| (16) | Curative accelerator | **Omicure 24,** 1,1-4 (methyl-m-phenylene) bis (3,3'dimethylurea), available from CVC speciality Chemicals, USA |
| (17) | Chemical foaming agent | **Opex 80,** dinitrosopentamethylene tetramine (DNPT), available from Uniroyal, Germany |
| (18) | Physical foaming agent | **Expancel DU 91,** encapsulated isopentane coresholl made of acrylonitrile copolymer, available from Akzo Nobel |

## Examples

### *Preparation of Examples 1-4*

The epoxy-based compositions of the present invention were prepared by combining the ingredients from the list of materials of table 2 in a 0.5 litre mogul mixer available from Guittard Co. In table 2 , all concentrations are given as wt. %.

A mixer temperature of 75 — 85 °C was maintained during the melting/mixing process of the high epoxy equivalent weight epoxy resins (Epilox A.50-02 and Epikote 1001) with the low epoxy equivalent weight epoxy resin (Epilox AF.18-50, Epon MK 107), using oil heating. Once melted, the homogeneous blend of the epoxy resins was kept at a temperature of 75 — 85 °C and the toughener (Paraloid EXL 2600) together with the film former (Paphen PKHP 200)) were added. Further melting and dispersing for 60 minutes was completed until the blend was once again homogeneous. In a next step all fillers (Raven 1255 P, Shieldex AC5, and Aerosil R.202 VV) were added to the blend and additional mixing for 30 minutes took place at a steady remaining temperature of the mixer of 75 — 85 °C. After the filler incorporation was completed, the mixer temperature was reduced to 65 — 70 °C. The two curatives (Amicure CG1200 and Omicure U.52M) and the chemical foaming agent (Opex 80) were then added to the mixture, followed by mixing for an additional 20 — 25 minutes. All of these mixtures were pastes having a smooth and uniform consistency and were dumped into heated drums after the completed mixing process from which they could be hot-melt coated to the desired film thicknesses.

The free expansion of the epoxy-base compositions during curing (at 125 °C and 175 °C) and the impact strength test as well as Floating Roller Peel Test (the metal to metal peel strength test) after curing were measured as described previously in the test method section. The results of these measurements are summarized in table 3.

The photograph reproduced as Fig. 1 below shows the cured toughened foamed film of Example 1 applied as an edge-sealant means to a conventional honeycomb core. It can be seen that the cured toughened foamed film exhibits an advantageous edge finishing.

### *Preparation of Comparative Examples 1- 3*

These epoxy-based compositions of the present invention were prepared by combining the ingredients from the list of materials table in a 0.5 liter mogul mixer available from Guittard Co. In table 2, all concentrations are given as wt. %.

A mixer temperature of 75 — 85 °C was maintained during the melting/mixing process of the three epoxy resins (Epikote 1001, Epilox AF.18-50 and BPA), using oil heating. Once melted, the homogeneous blend of the epoxy resins was kept at a temperature of 75 — 85 °C and the pre-reacted liquid toughener (Albipox 1000) added. In a next step a fumed silica filler (Aerosil(tm) R.202 VV) was added to the blend and additional mixing for 30 minutes took place at a steady remaining temperature of the mixer of 75 — 85 °C. After the filler incorporation was completed, the mixer temperature was reduced to 65 — 70°C. The remaining compounds as listed in table 2 were then added followed by mixing for an additional 20 — 25 minutes. All of these mixtures were pastes having a smooth and uniform consistency and were and dumped into heated drums after the completed mixing process, from which they could be hot-melt coated to the desired film thicknesses.

The free expansion of the epoxy-base compositions during curing (at 125 °C and 175 °C) and the impact strength test as well as the Floating Roller Peel Test (metal to metal peel strength test) after curing were measured as described previously in the test method section. The results of these measurements are summarized in table 3.

*Table 2*

| | Example 1 (wt. %) | Example 2 (wt. %) | Example 3 (wt. %) | Comparative Example 1 (wt. %) | Example 4 (wt. %) | Comparative Example 2 (wt. %) | Comparative Example 3 (wt. %) |
|---|---|---|---|---|---|---|---|
| Epilox A. 50-02 | 47,4 | 48,4 | 47,2 | | 47,0 | | |
| Epikote 1001 | | | | 31,3 | | 29,7 | 31,3 |
| Epilox AF.18-50 | 13,5 | 13,8 | 13,5 | 31,8 | 13,4 | 30,3 | 31,8 |
| BPA | | | | 8,6 | | 8,2 | 8,6 |
| Albipox 1000 | | | | 16,2 | | 15,4 | 16,2 |
| Epon MK 107 | 6,8 | 6,9 | 6,7 | | 6,7 | | |
| Paraloid EXL2600 | 16,9 | 17,3 | 16,9 | | 16,8 | | |
| Paphen PKHP 200 | 1,4 | | 1,3 | | 1.3 | | |
| Raven 1255 P | 0,7 | | 0,7 | | 0,7 | | |
| Aerosil R. 202 VV | 2,4 | 2,4 | 2,4 | 4,3 | 2,3 | 4,1 | 4,3 |
| Shieldex AC5 | 4,1 | 4,1 | 4,0 | | 4,0 | | |
| Amicure CG 1200 | 4,1 | 4,1 | 4,0 | | 4.0 | | |
| Omicure U.52M | 2.0 | 2,1 | 2,0 | | 2,0 | | |
| Omicure 24 | | | | 6,5 | | 6,2 | 6,5 |
| Opex 80 (DNPT) | 0,8 | 0,8 | 1,2 | 1,3 | 1,7 | | |
| Expancel DU 91 | | | | | | 6,2 | 1,3 |

*Table 3*

| | Free expansion (%), 125 °C cure | Floating Roller Peel Strength (N/25mm), 125 °C cure | Free expansion (%), 175 °C cure | Shear Impact Strength (kN/m$^2$) |
|---|---|---|---|---|
| Example 1 | 45 | 294 | 68 | 22,4 |
| Example 2 | 51 | 245 | 112 | 16,1 |
| Example 3 | 84 | 238 | 113 | 18,8 |
| Comparative Example 1 | 32 | 95 | 275 | 13,8 |
| Example 4 | 97 | 143 | 176 | 12,9 |
| Comparative Example 2 | 93 | <10 | 270 | 11,9 |
| Comparative Example 3 | 15 | | 41 | |

**Claims**

1. Precursor of a toughened foamed film comprising

    a. 30 - 60 wt. % of at least one epoxy compound with an average epoxy equivalent weight of at least 350 g,
    b. 10 - 25 wt. % of at least one epoxy compound with an average epoxy equivalent weight of less than 200 g,
    c. 2 - 40 wt. % of at least one epoxy curing agent,
    d. 10 - 30 wt. % of at least one toughening agent, and
    e. at least one blowing agent

    wherein the mass ratio of the epoxy components a and b and the amount of the toughening component d is selected to provide a floating roller peel strength of the cured film of at least 150 N/25 mm at 23 °C and/or a shear impact strength of at least 11.5 kN/m$^2$ at 23 °C.

2. Precursor according to claim 1 wherein the epoxy compounds with an average epoxy equivalent weight of at least 350 g and the epoxy compounds with an average epoxy equivalent weight of less than 200 g have an average epoxy functionality of at least 2.

3. Precursor according to claim 1 wherein the toughening agent is selected from the group of core-shell tougheners.

4. Precursor according to any of the previous claims comprising at least one film-forming agent.

5. Precursor according to any of the previous claims comprising one or more fillers in an amount of less than 10 wt. %.

6. Precursor according to any of the previous claims wherein the amount of the one or more blowing agents is selected to provide an expansion upon curing of between 40-100% when subjecting the precursor to a curing temperature above the onset temperature of the curing reaction.

7. Precursor according to claim 5 using one or more chemical blowing agents in an amount of between 0.5 and 1.5 wt. %.

8. Precursor according to claim 5 using one or more encapsulated blowing agents in an amount of between 2 and 10 wt. %.

9. Toughened thermo-expanded cured film which is obtainable by thermally curing the precursor of any of claims 1-8 at a temperature of between 105-180 °C.

10. Use of the precursor of any of claims 1-8 for void filling, edge sealing and/or edge finishing applications.

Fig. 1

**European Patent Office**

**EUROPEAN SEARCH REPORT**

Application Number

EP 05 01 5956

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 2002/076566 A1 (BRANDYS FRANK A ET AL) 20 June 2002 (2002-06-20) * the whole document * ----- | 1-10 | C08G59/18 B29C44/00 C08J9/00 B29C70/50 |
| A | EP 0 511 716 A (THE DEXTER CORPORATION) 4 November 1992 (1992-11-04) * the whole document * ----- | 1-10 | |
| A | US 5 660 901 A (WONG ET AL) 26 August 1997 (1997-08-26) * the whole document * ----- | 1-10 | |
| | | | **TECHNICAL FIELDS SEARCHED (Int.Cl.7)** |
| | | | C08G B29C C08J |

The present search report has been drawn up for all claims

| Place of search | Date of completion of the search | Examiner |
|---|---|---|
| Munich | 8 November 2005 | Marquis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 01 5956

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2005

| Patent document cited in search report | | Publication date | Patent family member(s) | | Publication date |
|---|---|---|---|---|---|
| US 2002076566 | A1 | 20-06-2002 | AU | 2043601 A | 03-07-2001 |
| | | | CN | 1411478 A | 16-04-2003 |
| | | | DE | 60013181 D1 | 23-09-2004 |
| | | | DE | 60013181 T2 | 11-08-2005 |
| | | | EP | 1252217 A1 | 30-10-2002 |
| | | | JP | 2003518177 T | 03-06-2003 |
| | | | WO | 0146290 A1 | 28-06-2001 |
| EP 0511716 | A | 04-11-1992 | CA | 2064650 A1 | 31-10-1992 |
| | | | DE | 69220841 D1 | 21-08-1997 |
| | | | DE | 69220841 T2 | 12-02-1998 |
| | | | HK | 1001344 A1 | 12-06-1998 |
| | | | JP | 3272398 B2 | 08-04-2002 |
| | | | JP | 6128401 A | 10-05-1994 |
| | | | RU | 2127291 C1 | 10-03-1999 |
| | | | US | 5397611 A | 14-03-1995 |
| | | | US | 5234757 A | 10-08-1993 |
| US 5660901 | A | 26-08-1997 | US | 5540963 A | 30-07-1996 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0511716 A
- WO 03055957 A
- US 5464902 A
- EP 1272587 A

- US 5019605 A
- US 4145369 A
- US 3445436 A
- US 3018262 A

**Non-patent literature cited in the description**

- **LEE ; NEVILLE.** Handbook of Epoxy Resins. Mc-Graw Hill Book Co, 1967